# EUROPEAN PATENT APPLICATION

(11) **EP 4 282 236 A1**
(43) Date of publication of application: **29.11.2023**
(21) Application number: 22175586.1
(22) Date of filing: 25.05.2022
(51) Int. Cl.: A01B 3/46

(54) **AGRICULTURAL PLOUGH**

(71) Applicant: CNH Industrial Sweden AB, 590 96 Överum (SE)
(72) Inventor: Hertzog, Daniel, 59376 Blackstad (SE)
(74) Representative: CNH Industrial IP Department

(57) **Abstract**

A wheel connection mechanism (450) for a plough that connects a ground engaging wheel (420) to a frame, wherein the wheel connection mechanism (450) defines a horizontal axis (451) and a swivel axis (452). The wheel connection mechanism (450) comprises a ploughing configuration when the ground engaging wheel (420) is in contact with the ground in which: the ground engaging wheel (420) is locked such that it cannot rotate about the swivel axis (452) and it is locked such that it cannot rotate about the horizontal axis (451). The wheel connection mechanism (450) also comprises a transport configuration when the ground engaging wheel (420) is in contact with the ground, in which: the ground engaging wheel (420) is rotatable about the swivel axis (452); and the ground engaging wheel (420) is locked such that it cannot rotate about the horizontal axis (451). The wheel connection mechanism (450) also comprises an unlocked configuration when the ground engaging wheel (420) is not in contact with the ground, in which: the ground engaging wheel (420) is rotatable about the horizontal axis (451) in order transition between the ploughing configuration and the transport configuration.

## Description

### Background of the Invention

The present disclosure relates to an agricultural plough, particularly, but not exclusively, to a plough comprising a plough implement. Other aspects of the present disclosure relate to a method for operating an agricultural plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset from each other when the plough is in use. Each plough body is connected to the plough frame via corresponding beams. The plough frame, in turn, is connected to a towing or pushing vehicle via a hitch arranged at a front or back end of the frame.

Depending on the density of the soil, a working depth of the plough bodies can be adjusted. For instance, the plough bodies working depth may be shallow in harder (dense) soils, whereas a deeper working depth may be applied in softer (less dense) soils. The plough bodies can be rigidly attached to the main frame, such that their distance from the main frame remains constant. Accordingly, the working depth of the ploughs are then adjusted by varying the ground clearance of the main frame. If the main frame is brought closer to the ground surface, the ground clearance is reduced, and the plough bodies penetrate deeper into the soil. Similarly, if the main frame is lifted further off the ground, the ground clearance is increased, and the plough bodies are raised, thereby reducing the working depth.

The ground clearance of the main frame may, for example, be controlled by one or more depth wheels. The one or more depth wheels may be connected to any part of the main frame such as the rear end of the main frame. An adjustable linkage may be provided between the main frame and the depth wheel to allow for changes in the distance between the depth wheel and the main frame. During ploughing, the depth wheel runs on the ground surface and supports the weight of the plough. If the distance between the depth wheel and the main frame is reduced, then the ground clearance between the main frame and the ground surface reduces accordingly. On the other hand, if the distance between the depth wheel and the main frame is increased, the ground clearance of the main frame increases. As outlined before, changing the main frame's ground clearance results in a variation of the ploughing depth.

Another factor in correctly setting up agricultural ploughs is a lateral adjustment of the plough bodies of the plough implement with respect to the work vehicle, i.e. in a direction perpendicular to the direction of travel. One way of laterally adjusting the plough bodies is by shifting a main frame of the plough implement with respect to the headstock. This may be used to adjust the lateral position of the first plough body of the plough implement to create homogenously aligned furrows.

Lateral adjustment of the plough implement and thus the plough bodies can also be used to change the ploughing width of the plough bodies and the resulting furrow width. To this end, the main frame of a plough implement may be pivoted with respect to the headstock in a horizontal plane (if the ground surface is horizontal) to change an angle of the main frame with respect to the agricultural work vehicle. When pivoting the main frame, the plough bodies are moved simultaneously in a lateral direction and a longitudinal direction with respect to the agricultural vehicle. Pivoting the main frame with respect to the work vehicle will change a lateral extent of the plough implement (e.g. the plough bodies). A lateral adjustment by pivoting thus has an impact on the ploughing width of the plough implement. It follows that the pivoting adjustment may have an impact on energy consumption and/or wear of the plough may be affected.

### Summary of the Invention

According to a first aspect of the present disclosure, there is provided a plough comprising:
a frame, which is rotatable between a ploughing orientation and a transport orientation;
a set of plough bodies connected to the frame such that: when the frame is in the ploughing orientation, the plough bodies can be positioned in the ground to perform a ploughing operation; and when the frame is in the transport orientation, the plough bodies are above the ground such that the plough can be transported without the plough bodies being positioned in the ground;
a ground engaging wheel; and
a wheel connection mechanism that connects the ground engaging wheel to the frame, wherein the wheel connection mechanism defines a horizontal axis and a swivel axis, wherein the ground engaging wheel is rotatable about the horizontal axis to move it around the longitudinal axis of the frame, wherein the swivel axis is parallel with the plane of the ground engaging wheel, wherein the wheel connection mechanism comprises:
   a ploughing configuration, when the frame is in the ploughing orientation and the ground engaging wheel is in contact with the ground such that it receives a reactive, vertically upwards, force from the ground, in which:
      the ground engaging wheel is locked such that it cannot rotate about the swivel axis of the wheel connection mechanism; and
      the ground engaging wheel is locked such that it cannot rotate about the horizontal axis of the wheel connection mechanism;
   a transport configuration, when the frame is in the transport orientation and the ground engaging wheel is in contact with the ground such that it receives a reactive, vertically upwards, force from the ground, in which:
      the ground engaging wheel is rotatable about the swivel axis of the wheel connection mechanism; and
      the ground engaging wheel is locked such that it cannot rotate about the horizontal axis of the wheel connection mechanism;
         and
   an unlocked configuration when the ground engaging wheel is not in contact with the ground such that it does not receive a reactive, vertically upwards, force from the ground, in which:
      the ground engaging wheel is rotatable about the horizontal axis of the wheel connection mechanism in order transition between the ploughing configuration and the transport configuration.

Advantageously, the wheel connection mechanism of such a plough is locked in a ploughing configuration or the transport configuration when the ground engaging wheel is in contact with the ground. Similarly the wheel connection mechanism is in the unlocked configuration when the ground engaging wheel is not in contact with the ground. In this way, the configuration of the wheel connection mechanism can be automatically changed when the orientation of the frame is changed (which requires the plough to be lifted off the ground), without requiring any manual operation to secure the wheel connection mechanism in its new configuration. This can greatly increase the speed with which a ploughing operation can be completed, and can also increase the safety of an operator of the plough because they do not have to manipulate any components of the plough by hand in order to change the configuration of the wheel connection mechanism.

The wheel connection mechanism may be locked in the ploughing configuration or the transport configuration when the ground engaging wheel receives at least a minimum reactive, vertically upwards, force from the ground. The wheel connection mechanism may be in the unlocked configuration when the ground engaging wheel does not receive at least the minimum reactive, vertically upwards, force from the ground.

The wheel connection mechanism may be configured to:
automatically transition from the ploughing configuration or the transport configuration to the unlocked configuration in response to removal of the reactive, vertically upwards, force on the ground engaging wheel.

The wheel connection mechanism may be configured to:
automatically transition from the unlocked configuration to the ploughing configuration or the transport configuration in response to the application of the reactive, vertically upwards, force on the ground engaging wheel.

The wheel connection mechanism may comprises a wheel attachment component and a frame attachment component, wherein:
the frame attachment component has a first notch and a second notch for receiving the wheel attachment component, wherein the first notch and the second notch are axially offset by about 90 degrees around the horizontal axis;
the wheel attachment component is movable vertically relative to the frame attachment component as the ground engaging wheel is raised from the ground and lowered on to the ground;
when the wheel connection mechanism is in the ploughing configuration, the wheel attachment component is secured in the first notch of the frame attachment component such that movement of the wheel attachment component about the horizontal axis is restricted; and
when the wheel connection mechanism is in the transport configuration, the wheel attachment component is secured in the second notch of the frame attachment component such that movement of the wheel attachment component about the horizontal axis is restricted.

When the wheel connection mechanism is in the unlocked configuration, the wheel attachment component may not be secured within either the first or the second notch of the frame attachment component such that the wheel attachment component is free to rotate about the horizontal axis.

The first notch and the second notch may have different depths such that the wheel attachment component is vertically displaced relative to the frame attachment component by different amounts when the wheel connection mechanism is in the ploughing configuration and the transport configuration such that:
when the wheel connection mechanism is in the ploughing configuration and the wheel attachment component is vertically offset from the frame attachment component by a first amount, a mechanical detent is positioned such that movement of the wheel attachment component about the swivel axis is prevented; and
when the wheel connection mechanism is in the transport configuration and the wheel attachment component is vertically offset from the frame attachment component by a second amount, the mechanical detent is positioned such that it permits movement of the wheel attachment component about the swivel axis.

The wheel attachment component may comprise a cylinder that provides part of the functionality of a depth adjustment apparatus.

When the wheel connection mechanism is in the unlocked configuration, the ground engaging wheel ,ay be locked such that it cannot rotate about the swivel axis of the wheel connection mechanism.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figure 1A shows a right-side view of an agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a work area;
Figure 3A shows a top view of a plough, in which the frame is in a first ploughing orientation;
Figure 3B shows a top view of a plough, in which the frame is in a second ploughing orientation;
Figure 3C shows a side view of a plough, in which the frame is in a transport orientation;
Figures 4A to 4H show different views of a wheel connection mechanism according to the present disclosure;
Figures 5A to 5E show different views of another wheel connection mechanism according to the present disclosure;
Figures 6A to 6G show different views of a yet further wheel connection mechanism according to the present disclosure; and
Figures 7A to 7H show different views of a further still wheel connection mechanism according to the present disclosure.

### Detailed Description of the Drawings

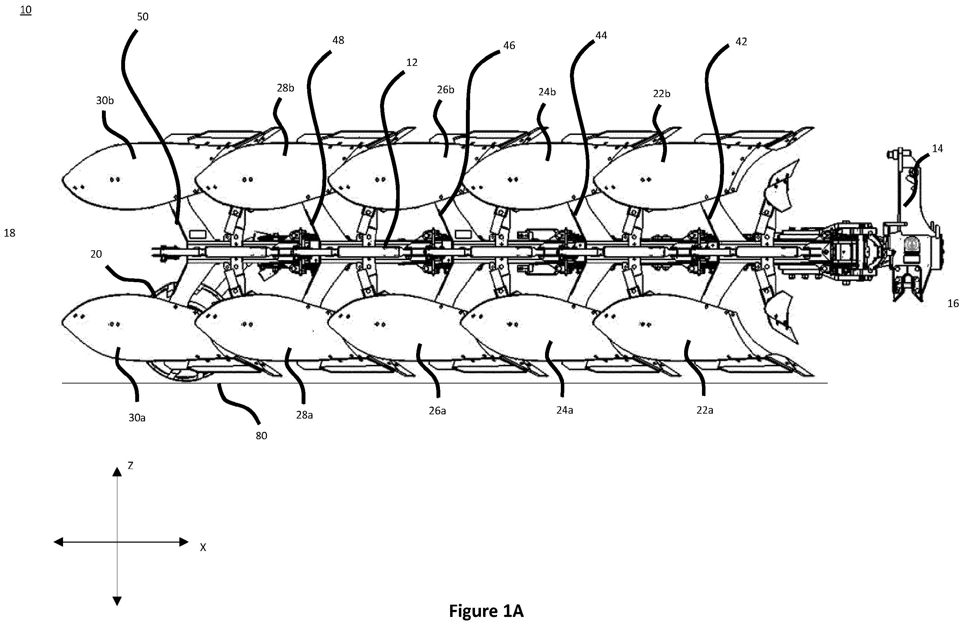

Figures 1A to 1C show various views of a plough implement 10. As will be described in more detail below, the plough implement 10 shown in Figures 1A to 1C is a reversible plough.

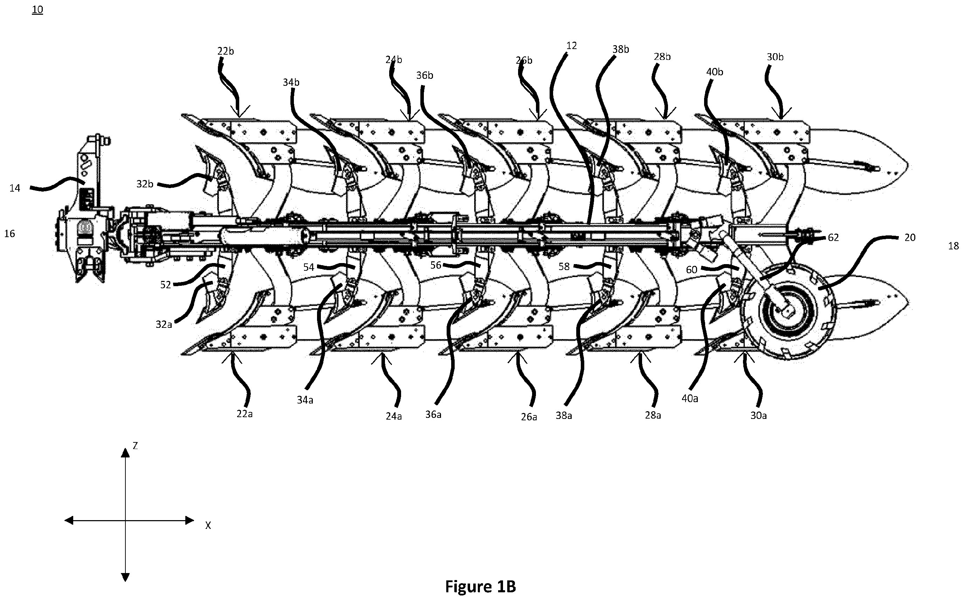

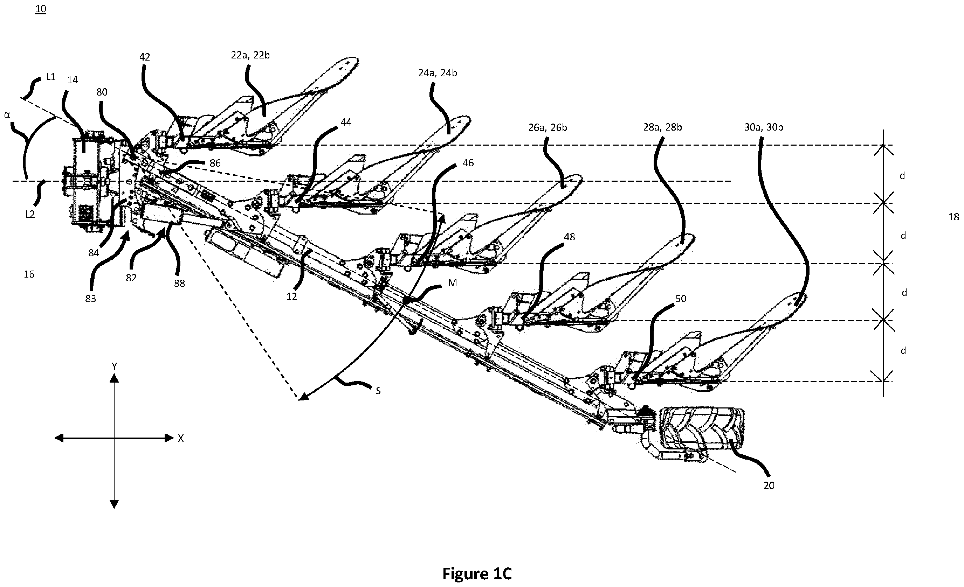

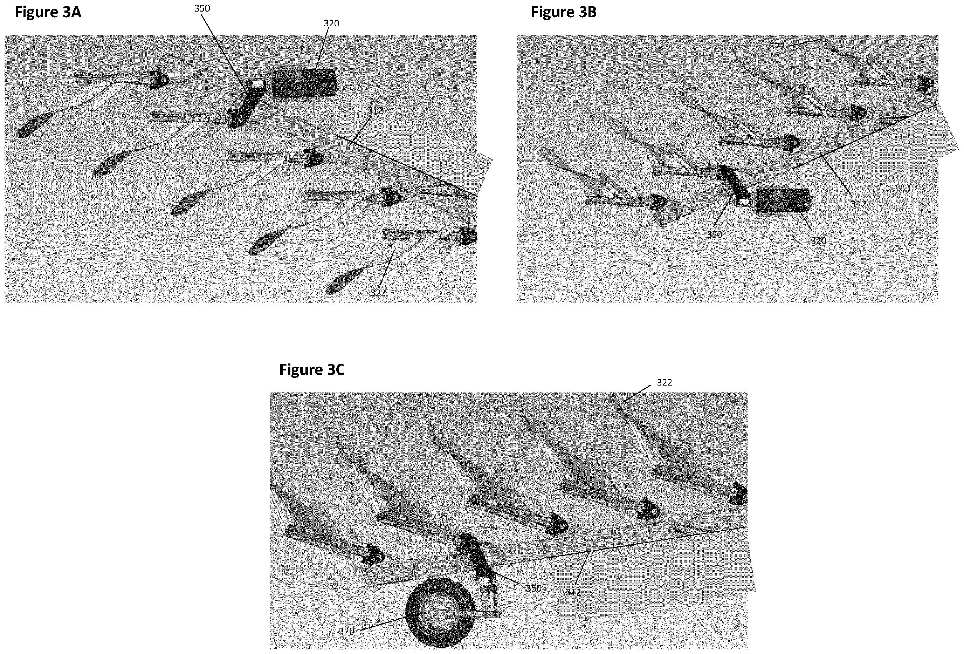

In the following, the term "longitudinal direction" shall refer to direction X shown in Figures 1A to 1C. In normal conditions, the "longitudinal direction" is aligned with a direction of travel of the agricultural plough implement 10. The term "lateral direction" shall refer to direction Y shown in Figures 1C and 3. The lateral direction Y is perpendicular to the "longitudinal direction" X. The term "vertical direction" shall refer to direction Z shown in Figures 1A and 1B. The "vertical direction" Z is perpendicular to the "longitudinal direction" X and the "lateral direction" Y.

The plough implement 10 comprises a main frame 12, which is also referred to simply as a frame. The main frame 12 may be a rectangular or round tube extending between a headstock 14 at a front end 16 of the plough towards a plough wheel 20 at a rear end 18 of the plough. The main frame 12 supports a variety of ground-engaging tools. The headstock 14 includes a hitch for connecting the plough implement 10 to an agricultural work vehicle, such that the agricultural work vehicle can propel the plough implement 100 either by towing / pulling it or pushing it. References to a headstock throughout this disclosure can be interpreted broadly as a hitch, which can be present in different forms on various agricultural implements that are propelled (towed or pushed) by an agricultural work vehicle.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first ploughing configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first ploughing configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of skimmers 40a, 40b. The skimmers 32a, 32b, 34a, 34b, 36a, 36b, 38a, 38b, 40a, 40b and/or their respective mounting rails may be adjustable with respect to the main frame 12 to change the distance between the skimmers 32a, 32b, 34a, 34b, 36a, 36b, 38a, 38b, 40a, 40b and the main frame. In one example, the skimmers 32a, 32b, 34a, 34b, 36a, 36b, 38a, 38b, 40a, 40b may be movable up and down towards and away from the main frame 12 to individually adjust the working depth of each of the skimmers. The skimmers 32a, 32b, 34a, 34b, 36a, 36b, 38a, 38b, 40a, 40b may either be manually or automatically adjustable.

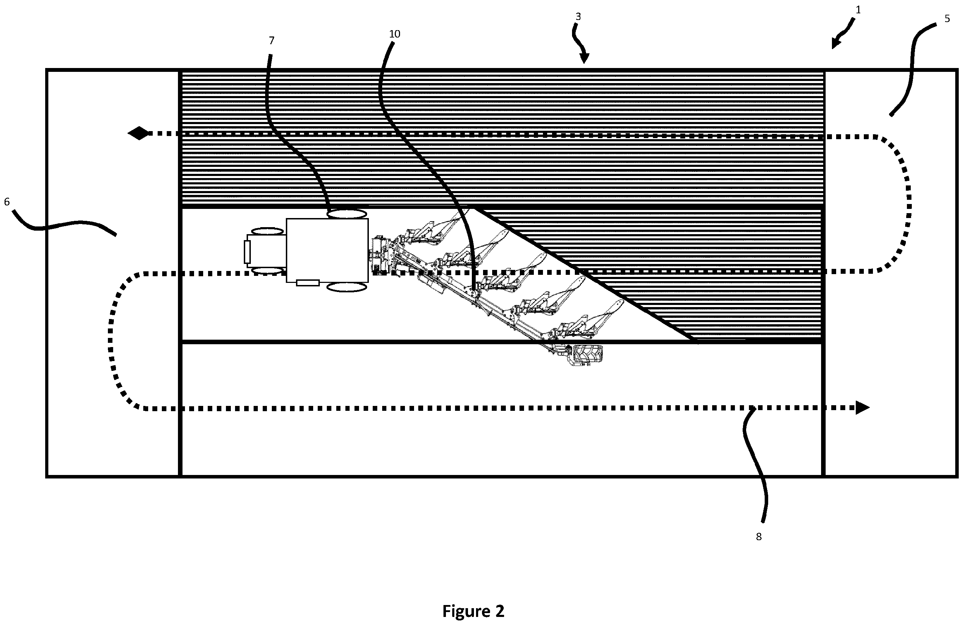

Turning to Figure 2, a typical operation of an agricultural machinery comprising a tractor 7 and a plough implement 10 is described. In use, the plough implement 10 is drawn as an attachment (implement) behind an agricultural towing vehicle (e.g. tractor 7). It will be appreciated that it is equivalently feasible to locate the plough implement 10 in front of or both in front of and behind the tractor 7.

Figure 2 shows a schematic work area 1, e.g. a crop field, which is divided into a main field 3 and headlands 5,6. A tractor 7 draws the plough implement 10 across the main field 3 in generally parallel working rows. The working rows are part of the trajectory 8 of the tractor 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the tractor 7 and plough implement 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough implement 10 reaches the headlands 5 or 6 respectively. Once the tractor 7 and the corresponding plough implement 10 have turned on the headland 5, 6, the ground engaging tools of the plough implement 10 are, again, lowered towards an operating position to engage the soil of the main field 3.

In the illustration of Figure 2, the plough implement 10 is working on the main field 3 and, therefore, is arranged in the operating position. As the plough implement 10 reaches the border between the headland 5/6 and the main field 3, the plough implement 10 is transferred to a headland/transfer position. It follows that each working row starts with an adjustment of the plough from the transfer position into the operating position and ends with an adjustment of the plough from the operating position into the transfer position.

The plough implement 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movement on the headlands, the plough implement 10 is also reversed. That is, the main frame 12 is rotated by about 180 degrees with respect to the headstock 14 to move the plough from a first ploughing configuration to a second ploughing configuration. It will be appreciated that if the operator is ploughing in the furrow, then the main frame 12 may not be rotated by exactly 180 degrees, it is more likely to be 190-200 degrees or 160-170 degrees depending on which direction the main frame 12 turns. If the operator is ploughing on-land, then the main frame 12 may be rotated by an angle that is closer to 180 degrees, perhaps exactly 180 degrees. That is, the main frame 12 is rotated by around 180 degrees with respect to the headstock 14 to move the plough from a first ploughing configuration to a second ploughing configuration.

In its first ploughing configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first ploughing configuration is shown in Figure 2 and sometimes also referred to as the "left side ploughing configuration", since most of the plough bodies are arranged to the left of tractor 7. In its second ploughing configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second ploughing configuration is achieved after rotating the main frame by 180 degrees, such that the majority of plough bodies are then located to the right of the tractor (not shown). The second ploughing configuration is, therefore, also sometimes referred to as the "right side ploughing configuration".

Tilling the field with the plough implement 10 in this first ploughing configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough implement 10 reaches the end of the first run, the main frame 12 is rotated by 180 degrees (reversed) with respect to the headstock 14. A turning cylinder (not shown), attached to the headstock 14 may be used to rotate (reverse) the plough implement 10. During rotation of the main frame, the first plurality of plough bodies, e.g. 22a, 24a, 26a, 28a, 30a, are transferred to the top of the plough implement 10. At the same time, the second plurality of plough bodies e.g. 22b, 24b, 26b, 28b, 30b, which were not in use in the previous run, is then transferred to the lower end of the plough implement 10 and will be submerged in the soil during the next run. The reversible plough is then in its second ploughing configuration (not shown).

Executing a second run of the field with the plough implement 10 in this second ploughing configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough implement 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In both ploughing configurations of the plough implement 10 the main frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes an implement wheel 20, which may also be referred to as a ground engaging wheel, which acts as a depth wheel to adjust the ground clearance of the main frame 12. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality of first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If, on the other hand, the main frame 12 is lifted, by extending the linkage 62 between implement wheel 20 and the main frame 12, then the working depth of the plurality of first ground engaging tools is decreased, i.e. the plurality of first ground engagement tools are raised.

Referring back to Figure 1C, it will be appreciated that the distance d between the plough bodies 22a/22b, 24a/24b, 26a/26b, 28a/28b, and 30a/30b is adjustable. In the embodiment of the plough implement 10 shown in Figures 1A to 1C, the lateral distance d is adjustable by pivoting the main frame 12 in a horizontal plane, such as in the plane shown in Figure 1C. In other words, the main frame 12 is connected to the headstock 14 via a pivot 80. The main frame 12 may rotate about the pivot 80 with respect to the headstock 14 and thus also with respect to an agricultural work vehicle (not shown) that is connected to the headstock 14.

In a normal operation, a longitudinal axis L1 of the main frame 12 is arranged at an angle a with respect to a longitudinal axis L2 of a corresponding agricultural work vehicle. It will be appreciated that the angle a between the longitudinal axis L1 of the main frame 12 and the longitudinal axis L2 of the agricultural work vehicle may be changed by pivoting the main frame about the pivot 80. A plough / furrow width adjustment mechanism 82 comprises the pivot 80 and a width adjustment actuator 88. The width adjustment actuator 88 in this embodiment is a hydraulic cylinder. By retracting the width adjustment actuator 88, a front part 86 of the main frame 12 will be drawn closer towards the headstock 14, thereby increasing the angle a between the longitudinal axis L1 of the main frame 12 and the longitudinal axis L2 of the agricultural work vehicle. As the angle a between the longitudinal axes L1, L2 is increased, so is the lateral distance d between the neighbouring plough bodies 22a to 30b. Similarly, if the actuator 88 is extended, the main frame 12 is pivoted counter-clockwise in Figure 1C about the pivot 80, thereby decreasing the angle a between the longitudinal axis L1 of the main frame 12 and the longitudinal axis L2 of the agricultural work vehicle. As the angle a between the longitudinal axis L1 and L2 is decreased, the lateral distance d between the neighbouring plough bodies 22a through to 30b decreases.

Although this is not specifically represented in Figure 1C, it will also be appreciated that as the angle a between the axes L1, L2 is increased, a lateral arrangement of the main frame and the plough bodies 22a to 30b with respect to the agricultural work vehicle (not shown) changes. This is because, as the angle a is manipulated, the centre M of the plough implement is moved along circular segment S. Accordingly, as the angle a is increased, the centre M of the plough implement 10 is moved towards the bottom of Figure 1C. Similarly, if the angle a is decreased, the centre M of the plough implement 10 moves towards the top end of Figure 1C.

A lateral adjustment of the plough bodies with respect to the agricultural work vehicle may also be possible without changing the angle a between the main frame 12 and the agricultural work vehicle. In the embodiment of the plough implement 10 shown in Figures 1A to 1C, the plough implement 10 includes a lateral frame adjustment mechanism 83, which is implemented as a sliding mechanism that allows for lateral movement of the main frame 12 with respect to the headstock 14 and, therefore, with respect to the agricultural work vehicle. Such lateral movement of the main frame 12 adjusts the width of the first furrow, which is created by the first plough body 22a, 22b at the front of the plough.

Figure 3A shows a top view of a plough, in which the frame 312 is in a first ploughing orientation. In Figure 3A, the plough is being pulled from left to right. A first set of plough bodies (one of which is labelled with reference 322) is connected to the frame 312 such that, when the frame 312 is in the first ploughing orientation, the first set of plough bodies can be positioned in the soil to perform a ploughing operation. In this example, the plough bodies turn the soil to the right-hand side (with reference to the forward motion of the plough) when the frame 312 is in the first ploughing configuration. As shown, the plane of the ground engaging wheel 320 is vertically aligned, and parallel with the direction of motion of the plough. In this example, the ground engaging wheel 320 is shown such that it is pointing forwards from its attachment to the frame 312. However, in other examples, the ground engaging wheel 320 can point backwards from its attachment to the frame 312 when the frame is in the first ploughing orientation. Either way, it can be advantageous for the quality of the ploughing operation if the ground engaging wheel 320 is fixed such that its plane is parallel with the direction of motion of the plough and such that it does not swivel about a vertical axis.

Figure 3B shows a top view of a plough, in which the frame 312 is in a second ploughing orientation. As discussed above, the frame 312 has been rotated by about 180 degrees from its first ploughing orientation (as shown in Figure 3A) such that a second set of plough bodies is in contact with the soil. In Figure 3B, the plough is being pulled from left to right, and soil is being turned over by the second set plough bodies to the left-hand side (with reference to the forward motion of the plough). The ground engaging wheel 320 is shown with a similar alignment to that shown in Figure 3A. Again, it can be advantageous for the quality of the ploughing operation if the ground engaging wheel 320 is fixed such that it does not swivel about a vertical axis when the frame is in the second ploughing configuration of Figure 3B.

Figure 3C shows a side view of a plough, in which the frame 312 is in a transport orientation. The frame 312 has been rotated such that it is midway between the first ploughing orientation (as shown in Figure 3A) and the second ploughing orientation (as shown in Figure 3B), and both the first and second sets of plough bodies point upwards, away from the ground. In this way, the plough bodies are above the ground such that the plough can be transported between ploughing operations. In Figure 3C, the plough is being pulled from left to right, and no soil is being turned over by either set of plough bodies. The ground engaging wheel 320 is in contact with the ground such that it enables the plough to be transported, for example on a road, without the plough bodies damaging the surface of the ground on which the plough is being transported. It can be advantageous for the ability to transport the plough if the ground engaging wheel 320 is rotatable about a vertical axis such that it can swivel as the plough is being transported. In this way, when the frame 312 is in the transport configuration, the ground engaging wheel 320 can be considered as a castor. This can be beneficial for manoeuvring, reversing, etc. during transport.

The frame 312 is rotatable about its longitudinal axis between a first ploughing orientation, a transport orientation and a second ploughing orientation. When the frame 312 is in the first ploughing orientation: a first longitudinally extending side surface of the frame 312 faces downwards towards the ground, and a second longitudinally extending side surface (that is opposite the first longitudinally extending side surface) faces upwards. When the frame 312 is in the second ploughing orientation: the second longitudinally extending side surface of the frame 312 faces downwards towards the ground, and the first longitudinally extending side surface faces upwards. When the frame 312 is in the transport orientation: both the first and the second longitudinally extending side surfaces of the frame 312 face sideways.

Furthermore, since it is the same ground engaging wheel 320 that contacts the ground when the frame 312 is in the first plough configuration (of Figure 3A), the second plough configuration (of Figure 3B), and the transport configuration (of Figure 3C), it is rotatable about a horizontal axis (that is parallel with the longitudinal axis of the plough) such that it can be rotated around the frame 312 and is positioned below the frame 312 irrespective of which configuration the frame 312 is in.

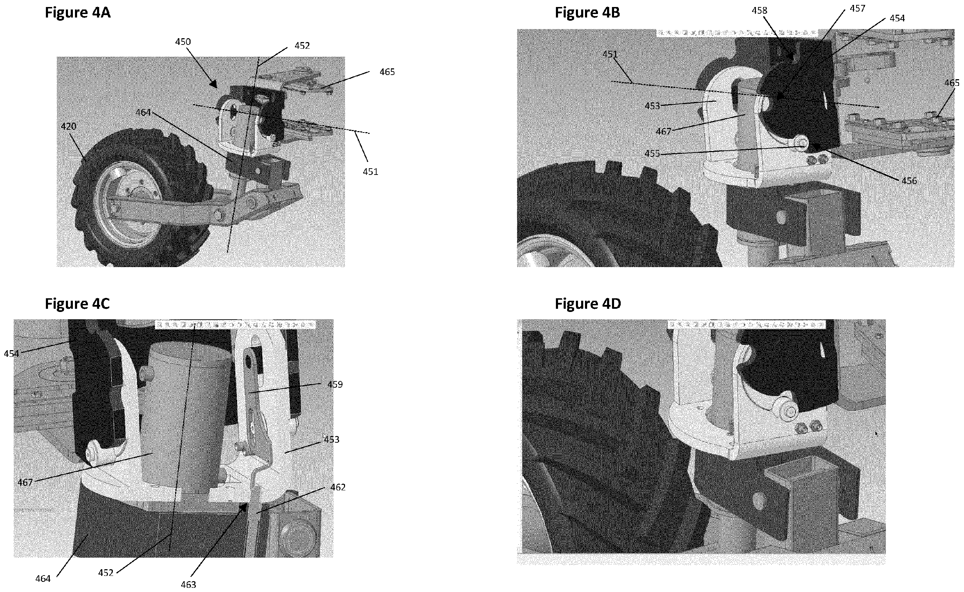

Figures 3A-3C also show a wheel connection mechanism 350 that connects the ground engaging wheel 320 to the frame 312. Three different examples of a wheel connection mechanism 350 will be discussed in detail below with reference to Figures 4A-4H, 5A-5E and 6A-6G. The wheel connection mechanism 350 defines a horizontal axis and a swivel (vertical) axis.

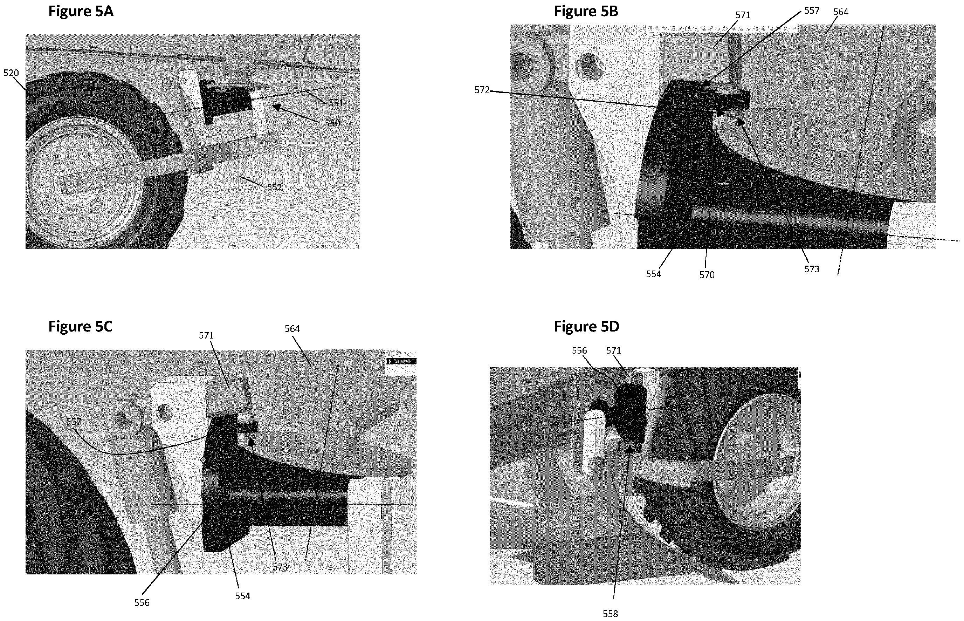

The ground engaging wheel 320 is rotatable about the horizontal axis defined by the wheel connection mechanism 350 in order to move it around (the longitudinal axis of) the frame. The horizontal axis defined by the wheel connection mechanism 350 is generally parallel with the longitudinal axis of the plough (whereby such a longitudinal axis can be defined as passing through the headstock pivot axle; or an alternative definition is an axis that intersects a plane that is parallel with the plough bodies landside and the horizontal plane of the frame 312). In some of the examples described herein (such as Figure 4A) the horizontal axis defined by the wheel connection mechanism 350 is parallel with the longitudinal axis of the frame 312. In other examples (such as Figure 5A) the horizontal axis defined by the wheel connection mechanism 350 may be slightly offset from the longitudinal axis of the frame 312, for example offset by an angle that is less than a threshold amount that still enables the ground engaging wheel 320 to be moved around the frame in order to sufficiently support the weight of the plough in its different configurations. More particularly, the horizontal axis that is defined by the wheel connection mechanism enables the ground engaging wheel 320 to move around the frame 312 as it is rotated between the first ploughing orientation, the transport orientation, and the second ploughing configuration such that the ground engaging wheel 320 is always positioned underneath the frame 312. In this example, the frame 312 is lifted into the air when it is desired to change the orientation of the frame 312 by rotating it, as discussed above. As the frame 312 is rotated, the ground engaging wheel 320 hangs underneath the frame 312 such that gravity will cause the ground engaging wheel 320 to rotate about the horizontal axis. In other words, the ground engaging wheel 320 continually hangs towards the ground due to gravity as the frame 312 rotates.

The swivel axis is parallel with the plane of the ground engaging wheel 320. As discussed above, it is advantageous for the ground engaging wheel 320 to be rotatable about the swivel axis when the frame is in the transport orientation. It is also advantageous for the ground engaging wheel 320 to be locked, such that it cannot rotate about the swivel axis, when the frame 312 is in one of the ploughing configurations.

Although the examples disclosed herein relate to a reversible plough that can perform left and right ploughing operations, it will be appreciated that in other examples a non-reversible plough may be used, in which case the frame will only have a single ploughing orientation and the wheel connection mechanism 350 will only have a single ploughing configuration.

Figures 4A to 4H show different views of a wheel connection mechanism 450 according to the present disclosure. As will be discussed below, the wheel connection mechanism has a first ploughing configuration, a second ploughing configuration, a transport configuration and an unlocked configuration. The wheel connection mechanism can be put into the unlocked configuration in order to enable to transition between any of the other configurations.

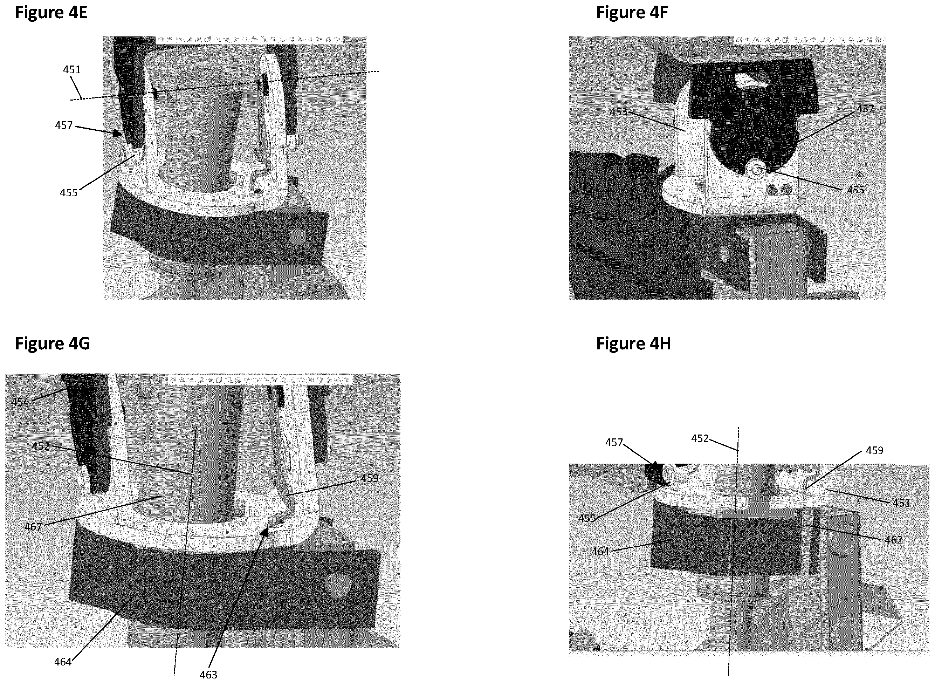

Figure 4A shows an overview of the wheel connection mechanism 450 and the associated ground engaging wheel 420. The frame has been omitted from Figures 4A to 4H to assist with the clarity of the illustration of the wheel connection mechanism 450. The horizontal axis 451 and the swivel axis 452 are marked up in some of Figures 4A to 4H with dashed lines. In Figure 4A it can be seen that the wheel connection mechanism 450 is in a ploughing configuration because a frame connection bracket 465 for attaching to the frame extends sideways from the plane of the ground engaging wheel 420 (whereas when it is in the transport configuration it extends upwards, as shown in Figure 4F).

Figure 4B shows a zoomed in view of the wheel connection mechanism 450 of Figure 4A, which is in the first ploughing configuration. When the frame is in the first ploughing orientation, the ground engaging wheel 420 is in contact with the ground such that it provides a reactive, vertically upwards, force on the wheel connection mechanism 450. Figure 4B will be used to describe how this example of the wheel connection mechanism 450 locks the ground engaging wheel 420 such that it cannot rotate about the horizontal axis 451 of the wheel connection mechanism 450 when it is in the first ploughing configuration.

The wheel connection mechanism 450 includes a wheel attachment component 453 and a frame attachment component 454. The wheel attachment component 453 is, in the vertical dimension, fixedly connected to the ground engaging wheel 420 such that the reactive, vertically upwards, force that is applied by the ground to the ground engaging wheel 420 is also directly received by the wheel attachment component 453. The frame attachment component 454 is fixedly connected to the frame by the frame connection bracket 465. The wheel attachment component 453 is movable vertically relative to the frame attachment component 454 as the ground engaging wheel 420 is lifted from the ground (and the reactive, vertically upwards, force from the ground is removed) and as the ground engaging wheel 420 is lowered on to the ground (and the reactive, vertically upwards, force is applied by the ground). As will be discussed below, lowering the ground engaging wheel 420 on to the ground locks the wheel connection mechanism 450 into the first ploughing configuration.

The frame attachment component 454 has a pair of first notches 456, a pair of second notches 457 and a pair of third notches 458, each of which are for receiving the wheel attachment component 453. More particularly, in this example the pairs of notches 456, 457, 458 can receive a pair of pegs 455 that extend from the wheel attachment component 453. The pair of first notches 456, the pair of second notches 457 and the pair of third notches 458 are axially offset from each other, sequentially in that order, by about 90 degrees around the horizontal axis 451. The pair of pegs 455 is located in the pair of first notches 456 when the wheel connection mechanism 450 is in the first ploughing configuration (as shown in Figure 4B), they are located in the pair of second notches 457 when the wheel connection mechanism 450 is in the transport configuration (as shown in Figure 4F), and they are located in the pair of third notches 458 when the wheel connection mechanism 450 is in the second ploughing configuration (not shown in the figures). When the peg 455 is secured in one of the pairs of notches 456, 457, 458 of the frame attachment component 454, movement of the wheel attachment component 453 about the horizontal axis 451 is restricted and the wheel connection mechanism 450 is maintained in its current configuration.

In this way, the plough can be lifted off the ground such that the ground engaging wheel 420 is also lifted from the ground and gravity causes the pegs 455 to drop out of a pair of notches 456, 457, 458 (as shown in Figure 4D). The wheel attachment component 453 and the frame attachment component 454 are slidably connected to each other between two end stops, such that one of the end stops prevents the wheel attachment component 453 from becoming completely disengaged from the frame attachment component 454 when the plough is lifted into the air. While the plough is suspended above the ground, the frame can be rotated to a desired orientation such that the pegs 455 are located underneath the pair of notches 456, 457, 458 that correspond to the desired orientation. Then, when the ground engaging wheel 420 is brought back into contact with the ground, the wheel attachment component 453 is moved upwards relative to the frame attachment component 454 such that the pegs 455 are secured within one of the pair of notches 456, 457, 458.

Figure 4C will be used to describe how this example of the wheel connection mechanism 450 also locks the ground engaging wheel 420 such that it cannot rotate about the swivel axis 452 of the wheel connection mechanism 450 when it is in a ploughing configuration.

The frame attachment component 454 has a downwardly extending pin 459, which is fixedly provided as part of the frame attachment component 454. As the wheel attachment component 453 moves vertically with respect to the frame attachment component 454, it also moves vertically with respect to the downwardly extending pin 459.

The wheel connection mechanism 450 in this example also includes a wheel swivelling component, in this example a wheel swivelling sleeve 464, that is selectively rotatable about the swivel axis 452 with respect to both the wheel attachment component 453 and the frame attachment component 454. In addition, the wheel connection mechanism 450 in this example includes a cylinder 467 that provides the functionality of a depth adjustment apparatus (as discussed above). The wheel swivelling sleeve 464 is selectively rotatable about the swivel axis 452 around the cylinder 467. Therefore, the axis of the cylinder 467 in this example defines the swivel axis 452. That is, the swivel axis 452 is aligned with the axis of the cylinder 467. The cylinder 467 in this example is fixed, in both the vertical dimension and rotationally about the swivel axis 452, with respect to the wheel attachment component 453.

A moveable pin 462 is located in the wheel swivelling sleeve 464 such that it can be selectively engaged with the wheel attachment component 453 in order to either permit or prevent rotation of the wheel swivelling sleeve 464 around the swivel axis 452. The moveable pin 462 can be biased towards a position that engages with the wheel attachment component 453 such that rotation of the wheel swivelling sleeve 464 (and hence rotation of the ground engaging wheel 420) about the swivel axis 452 is prevented. In this example, the moveable pin 462 is spring loaded such that it is biased upwards. When the wheel connection mechanism 450 is in the first ploughing configuration, as shown in Figure 4C, the moveable pin 462 is located in a hole 463 in the wheel attachment component 453 such that the engagement between the movable pin 462 and the hole 463 prevents rotation of the wheel swivelling sleeve 464 about the swivel axis 452. As will be discussed below, with reference to Figure 4H, when the wheel connection mechanism 450 is in the transport configuration, the downwardly extending pin 459 has pushed the moveable pin 462 out of the hole 463 such that the wheel swivelling sleeve 464 is free to rotate about the swivel axis 452.

Turning now to Figures 4D and 4E, the wheel connection mechanism 450 is shown in the unlocked configuration. The plough has been lifted off the ground (for example by a tractor that provides pulsion to the plough (not shown)), and the ground engaging wheel 420 is not in contact with the ground. Therefore, the ground does not provide a reactive, vertically upwards, force to the wheel connection mechanism 450. The pegs 455 are no longer received in any of pairs of notches 456, 457, 458 and therefore the ground engaging wheel 420 is rotatable about the horizontal axis 451 of the wheel connection mechanism 450 in order to transition between the first ploughing configuration and the transport configuration.

In Figure 4D, the pegs 455 are positioned underneath the pair of first notches 456, which are associated with the first ploughing configuration of the wheel connection mechanism 450. In Figure 4E, the frame has been rotated such that it is in the transport orientation and the pegs 455 are positioned underneath the pair of second notches 457, which are associated with the transport configuration of the wheel connection mechanism 450.

Turning now to Figure 4F, the plough has been returned to the ground such that the pegs 455 are secured in the pair of second notches 457 and the wheel connection mechanism 450 is put into the transport configuration. When the wheel connection mechanism 450 is in the transport configuration, movement of the wheel attachment component 453 about the horizontal axis 451 is again restricted.

Figures 4G and 4H also show the wheel connection mechanism 450 in the transport configuration. In the transport configuration, the ground engaging wheel 420 is rotatable about the swivel axis 452 of the wheel connection mechanism 450. This functionality is provided in this example by the pair of second notches 457 being deeper than the pair of first notches 456. In this way, the wheel attachment component 453 is vertically displaced relative to the frame attachment component 454 by a different amount than is the case when the wheel connection mechanism 450 is in the ploughing configuration. This enables the downwardly extending pin 459 to be moved into the hole 463 in the wheel attachment component 453 such that it moves the movable pin 462 out of the hole 463. Once the movable pin 462 has been freed from the hole 463, the wheel swivelling sleeve 464 is free to rotate around the cylinder 467 about the swivel axis 452.

More generally, the moveable pin 462 is one example of a mechanical detent that can be positioned to either permit or prevent rotation of the ground engaging wheel 420 about the swivel axis 452. When the wheel connection mechanism 450 is in the ploughing configuration and the wheel attachment component 453 is vertically offset from the frame attachment component 454 by a first amount, the mechanical detent (the movable pin 462) is positioned such that movement of the wheel attachment component 453 about the swivel axis 452 is prevented. When the wheel connection mechanism 450 is in the transport configuration and the wheel attachment component 453 is vertically offset from the frame attachment component 454 by a second amount, the mechanical detent (the movable pin 462) is positioned such that it permits movement of the wheel attachment component 453 about the swivel axis 452.

Although it is not shown in any of Figures 4A to 4H, it will be appreciated that the frame can be rotated to a second ploughing orientation such that the pegs 455 can be located in the pair of third notches 458. In this way, the wheel connection mechanism 450 can be put into a second ploughing configuration that is very similar to the first ploughing configuration that is described above. The difference between the first and second ploughing configurations is that the frame is rotated by about 180 degrees such that different sets of plough bodies engage with the soil in order to turn over soil either to the left or to the right.

Figures 5A to 5E show different views of another wheel connection mechanism 550 according to the present disclosure. The wheel connection mechanism 550 of this example also has a first ploughing configuration, a second ploughing configuration, a transport configuration and an unlocked configuration.

Figure 5A shows an overview of the wheel connection mechanism 550 and the associated ground engaging wheel 520. The horizontal axis 551 and the swivel axis 552 are marked up in some of Figures 5A to 5E with dashed lines.

Figure 5A shows the wheel connection mechanism 550 in the transport configuration, and Figure 5B shows a zoomed in view of the wheel connection mechanism 550 of Figure 5A. The wheel connection mechanism 550 includes a lever 571 that is put into an open position when the plough is lifted from the ground and the ground engaging wheel does not receive a reactive, vertically upwards, force from the ground. When the lever 571 is in the open position, the wheel connection mechanism 550 is in the unlocked configuration. When the lever 571 is in a closed position, the wheel connection mechanism 550 is in one of the ploughing configurations or the transport configuration. The lever 571 can be considered as similar to the wheel attachment component of Figures 4A to 4H in that (at least part of) it is moved upward and downwards in response to the presence or absence of the ground providing a reactive, vertically upwards, force on the ground engaging wheel 520.

A frame attachment component 554 includes a first notch 556, a second notch 557 and a third notch 558, which are axially offset from each other, in that order, by about 90 degrees around the horizontal axis 551 in a similar way to that described above with reference to Figures 4A to 4H.

In the transport configuration, the ground engaging wheel 520 is rotatable about the swivel axis 552 of the wheel connection mechanism 550. This functionality is provided in this example by a movable pin 570, which includes a cut-out 572. As will be appreciated from the description that follows, the movable pin 570 is only associated with the second notch 558 in the frame attachment component 554. When the lever 571 is closed and located in the second notch 558, it pushes the movable pin 570 downwards such that the cut-out 572 is aligned with a wheel swivelling component 564. Although in this example the wheel swivelling component 564 is fixed to the frame, it is the wheel swivelling component 564 that contributes to the wheel connection mechanism 550 being able to selectively permit rotation of the ground engaging wheel 520 around the swivel axis 552. More particularly, in this example the frame attachment component 554 can rotate around the wheel swivelling component 564, and therefore about swivel axis 552, when the frame attachment component 554 is aligned with the cut out 572 in the movable pin 570.

Figure 5C shows the wheel connection mechanism 550 in the unlocked configuration, in response to the ground engaging wheel 520 being lifted off the ground, with the lever 571 in the open position such that it is not secured in any of the notches 556, 557, 558 in the frame attachment component 554. Therefore, the ground engaging wheel 520 is free to rotate about the horizontal axis 551 of the wheel connection mechanism 550. As the lever 571 is raised / opened, the moveable pin 570 is biased to an extended position such that the cut out 572 in the movable pin 570 is no longer aligned with the wheel swivelling component 564. Furthermore, a non-cut out region of the movable pin 570 is positioned in a swivel prevention notch 573 in the wheel swivelling component 564. When the movable pin 570 is positioned in this way, it prevents the frame attachment component 554 from being able to rotate around the wheel swivelling component 564, thereby locking its position about the swivel axis 552.

Figure 5D shows the wheel connection mechanism 550 still in the unlocked position, but with the frame having been rotated such that it is in the first ploughing orientation. In this orientation, the lever 571 is positioned over the first notch 556.

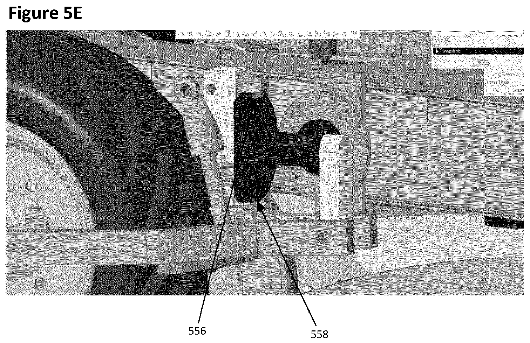

Figure 5E shows the wheel connection mechanism 550 in the first ploughing configuration. The ground engaging wheel 520 has been brought into contact with the ground such that the lever 571 has been closed, and located in the first notch 568. Locating the lever 571 in the first notch 558 locks the position of the ground engaging wheel 520 about the horizontal axis 551. Furthermore, the ground engaging wheel 520 is still locked about the swivel axis 552 as discussed with reference to Figure 5C. This is because the movable pin 570 (that is only associated with the second notch 557) is locked in the swivel prevention notch 573 in the wheel swivelling component 564.

It will be appreciated that the wheel connection mechanism 550 can similarly be put in the second ploughing configuration by rotating the frame such that the lever 571 is closed and located in the third notch 558.

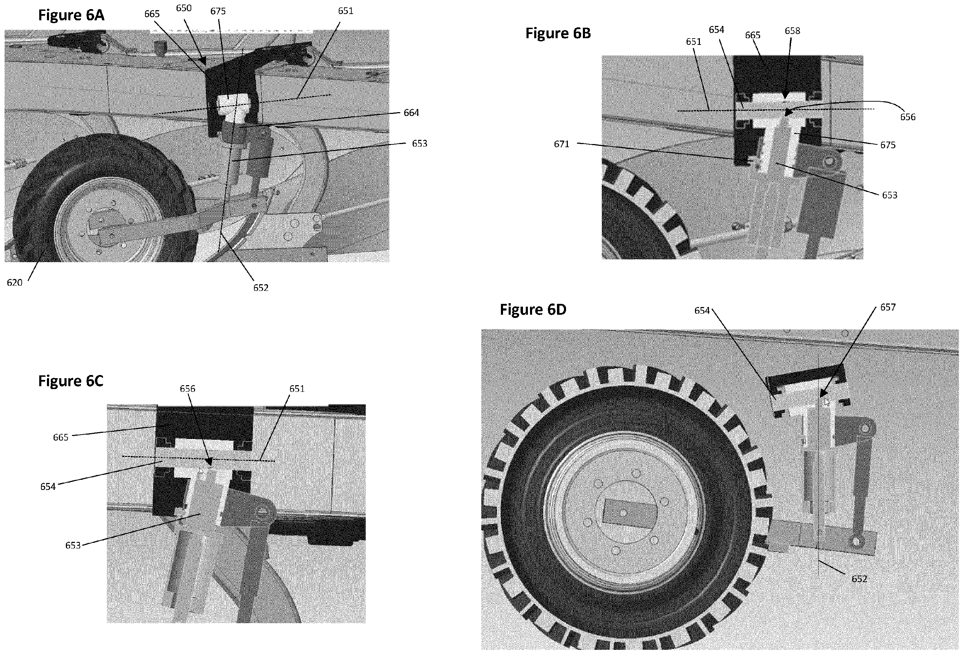

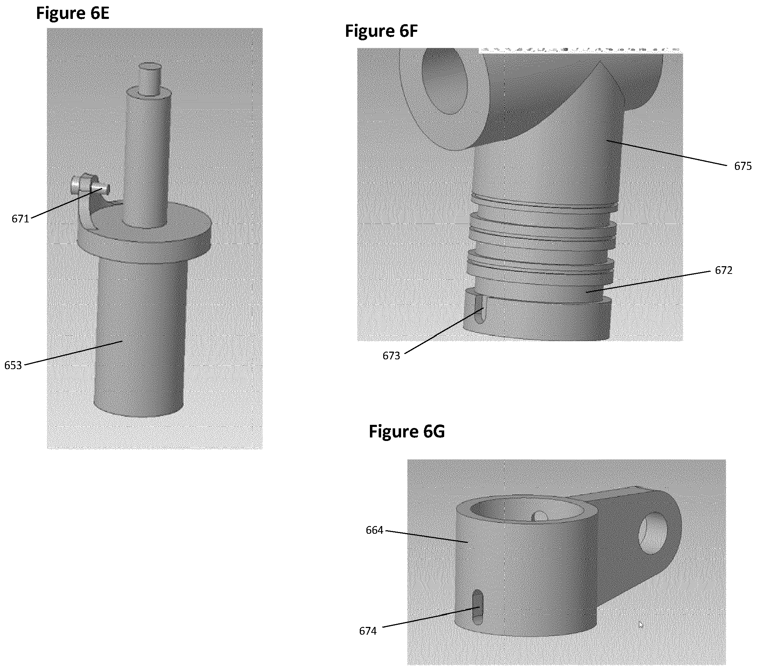

Figures 6A to 6G show different views of a yet further wheel connection mechanism 650 according to the present disclosure. The wheel connection mechanism 650 of this example also has a first ploughing configuration, a second ploughing configuration, a transport configuration and an unlocked configuration. Figure 6E shows only a wheel attachment component 653 of the wheel connection mechanism 650. Figure 6F shows only a swivel control component 675 of the wheel connection mechanism 650. Figure 6G shows only a wheel swivelling sleeve 664 of the wheel connection mechanism 650.

Figure 6A shows an overview of the wheel connection mechanism 650 and the associated ground engaging wheel 620. The horizontal axis 651 and the swivel axis 652 are marked up in some of Figures 6A to 6G with dashed lines.

Figure 6A shows the wheel connection mechanism 650 in the first ploughing configuration, and Figure 6B shows a cross-section through the wheel connection mechanism 650 of Figure 6A. The wheel connection mechanism 650 includes a frame connection bracket 665, which is fixedly connected to horizontal axle 654. The frame connection bracket 665 and the horizontal axle 654 can together be considered as an example of a frame attachment component. The horizontal axle 654 defines the horizontal axis 651 of the wheel connection mechanism 650, in that the ground engaging wheel 620 can be rotated around the horizontal axle 654 in order to transition between a ploughing configuration and the transport configuration. The horizontal axle 654 includes three circumferentially spaced notches: a first notch 656 associated with the first ploughing configuration, a second notch 657 associated with the transport configuration, and a third notch 658 associated with the second ploughing configuration. The first notch 656, the second notch 657 and the third notch 658 are axially offset from each other, sequentially in that order, by about 90 degrees around the circumference of the horizontal axle 654. The first notch 656 and the third notch 658, which are circumferentially spaced apart by about 180 degrees, are shown in Figure 6B. The second notch 657, which is circumferentially spaced by about 90 degrees from both the first notch 656 and the third notch 658, is shown in Figure 6D.

When the ground engaging wheel 620 is in contact with the ground, the ground provides a reactive, vertically upwards, force to the wheel attachment component 653. The wheel attachment component 653 is slidably connected to the swivel control component 675, such that the wheel attachment component 653 can move vertically with respect to the horizontal axle 654. In Figure 6B, the wheel attachment component 653 has been pushed vertically upwards such that a distal tip of the wheel attachment component 653 is secured in the first notch 656. Securing the wheel attachment component 653 in a notch of the horizontal axle 654 prevents rotation of the wheel attachment component 653 (and hence also the ground engaging wheel 620) about the horizontal axis 651.

Furthermore, the wheel attachment component 653 includes a radially extending pin 671 that engages with the swivel control component 675. The axis of the wheel attachment component 653 defines the swivel axis 652. When the wheel connection mechanism 650 is in the first ploughing configuration, the radially extending pin 671 is retained in an axially extending slot 673 in the swivel control component 675 (shown in Figure 6F). In this way, the wheel attachment component 653 (and hence also the ground engaging wheel 620) cannot rotate about the swivel axis 652 when the wheel connection mechanism 650 is in a ploughing configuration. As will be discussed below, the second notch 657 is deeper than the first notch 656 and the third notch 658 such that the radially extending pin 671 is not retained in the axially extending slot 673 when the wheel connection mechanism 650 is in the transport configuration, and thus the wheel attachment component 653 is free to rotate about the swivel axis 652.

Figure 6C shows the wheel connection mechanism 650 in the unlocked configuration. The plough has been lifted off the ground, and the wheel attachment component 653 has dropped out of the first notch 656 in the horizontal axle 654. Therefore, as the frame is rotated about its longitudinal axis, the wheel attachment component 653 is free to rotate about the horizontal axis 651 such that it can retain underneath the frame.

Figure 6D shows that the frame has been rotated to its transport orientation, and that the plough has been lowered back to the ground. Therefore, the wheel connection mechanism 650 is in the transport configuration and the wheel attachment component 653 is locked into the second notch 657 of the horizontal axle 654. In the same way as discussed above with reference to the ploughing configuration, locating the wheel attachment component 653 in the second notch 657 prevents rotation of the ground engaging wheel 620 about the horizontal axis 651.

As indicated above, the second notch 657 is deeper than the first and third notches 656, 658. Therefore, in the transport configuration, the wheel attachment component 653 has been vertically displaced upwards with respect to the swivel control component 675 further than is the case in a ploughing configuration. This additional vertical displacement causes the radially extending pin 671 of the wheel attachment component 653 to move out of the axially extending slot 673 in the swivel control component 675. Instead, the radially extending pin 671 is located in a circumferentially extending groove 672 in the swivel control component 675. In this way, the radially extending pin 671 is free to move along the circumferentially extending groove 672, and correspondingly the wheel attachment component 653 (and hence also the ground engaging wheel 620) is free to rotate about the swivel axis 652.

In this example, the wheel swivelling sleeve 664 is connected to the wheel attachment component 653 such that they can rotate about the swivel axis 652 together. Therefore the wheel swivelling sleeve 664 includes an axially extending slot 674, through which the radially extending pin 671 passes in order to engage with either the axially extending slot 673 or the circumferentially extending groove 672 in the swivel control component 675.

In this example, when the wheel connection mechanism 650 is in the unlocked configuration, the radially extending pin 671 is located in the axially extending slot 673 such that the ground engaging wheel 620 cannot rotate about the swivel axis 652. In the other examples of the wheel connection mechanism described herein, the ground engaging wheel can also be locked such that it cannot rotate about the swivel axis of the wheel connection mechanism when it is in the unlocked configuration.

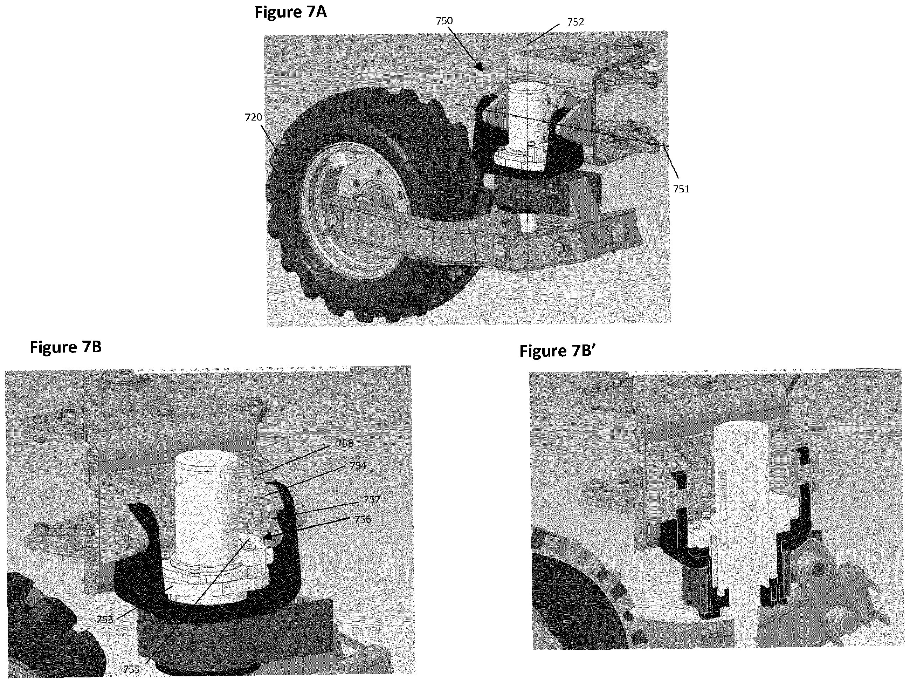

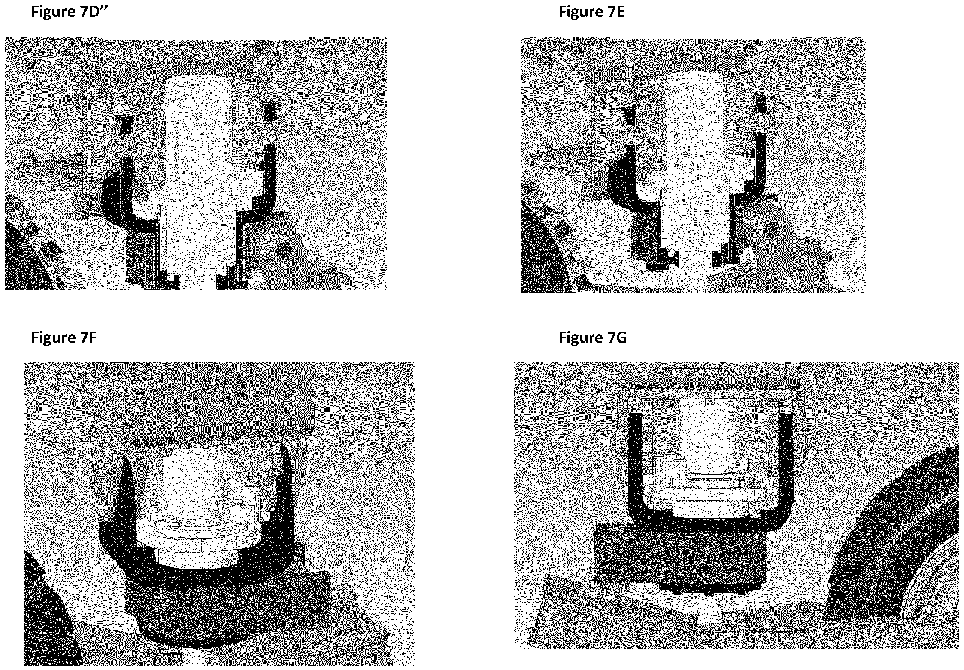

Figures 7A to 7H show different views of a wheel connection mechanism 750 according to the present invention. The views of Figures 7A to 7H generally correspond to the views of Figures 4A to 4H, where those of Figures 7A to 7H that are labelled with a prime (e.g., Figure 7B') correspond to cross-sectional view of the wheel connection mechanism 750. Features of Figures 7A to 7H that are immediately recognisable as corresponding to features in Figures 4A to 4H will not necessarily be described here.

Figure 7A shows an overview of the wheel connection mechanism 750 and the associated ground engaging wheel 720, in which the horizontal axis 751 and the swivel axis 752 are marked up with dashed lines. In Figure 7A it can be seen that the wheel connection mechanism 750 is in a ploughing configuration.

Figure 7B shows a zoomed in view of the wheel connection mechanism 750 of Figure 7A, which is in the first ploughing configuration. Figure 7B' shows a cross-sectional view through the wheel connection mechanism 750 of Figure 7B. In the same way as Figure 4B, Figure 7B shows how the wheel connection mechanism 750 locks the ground engaging wheel 720 such that it cannot rotate about the horizontal axis 751 of the wheel connection mechanism 750 when it is in the first ploughing configuration.

The wheel connection mechanism 750 includes: a wheel attachment component 753 having a (single) peg 755; and a frame attachment component 754 having a first notch 756, a second notch 757 and a third notch 758, each of which are for receiving the peg 755. The first notch 756, the second notch 757 and the third notch 758 are axially offset from each other, sequentially in that order, by about 90 degrees around the horizontal axis 751.

The peg 755 is located in the first notch 756 when the wheel connection mechanism 750 is in the first ploughing configuration (as shown in Figure 7B), it is located in the second notch 757 when the wheel connection mechanism 750 is in the transport configuration (as shown in Figure 7F), and it is located in the third notch 758 when the wheel connection mechanism 750 is in the second ploughing configuration (not shown in the figures). When the peg 755 is secured in one of the notches 756, 757, 758, movement of the wheel attachment component 753 about the horizontal axis 751 is restricted and the wheel connection mechanism 750 is maintained in its current configuration.

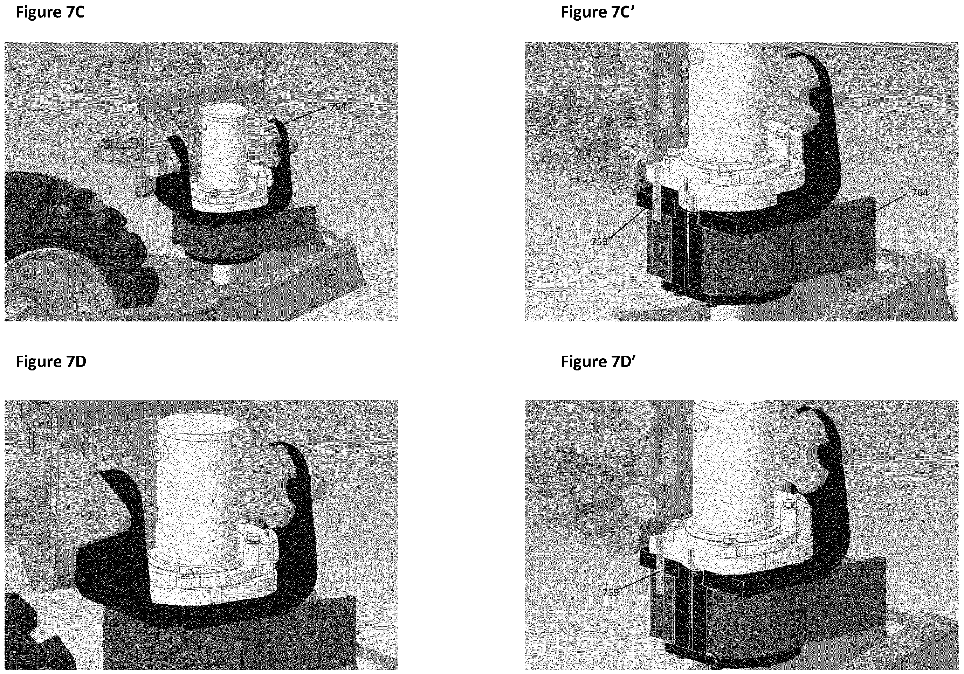

In the same way as described above, the plough can be lifted off the ground such that the ground engaging wheel 720 is also lifted from the ground and gravity causes the peg 755 to drop out of a notch 756, 757, 758 (as shown in Figure 7D). While the plough is suspended above the ground, the frame can be rotated to a desired orientation such that the peg 755 is located underneath the notch 756, 757, 758 that correspond to the desired orientation. Then, when the ground engaging wheel 720 is brought back into contact with the ground, the wheel attachment component 753 is moved upwards relative to the frame attachment component 754 such that the peg 755 is secured within one of the notches 756, 757, 758.

Figures 7C and 7C' will be used to describe how this example of the wheel connection mechanism 750 also locks the ground engaging wheel 720 such that it cannot rotate about the swivel axis 752 of the wheel connection mechanism 750 when it is in a ploughing configuration.

The wheel attachment component 753 has a downwardly extending pin 759, which is fixedly provided as part of the wheel attachment component 753. As the wheel attachment component 753 moves vertically with respect to the wheel swivelling sleeve 764, the downwardly extending pin 759 also moves vertically with respect to the wheel swivelling sleeve 764.

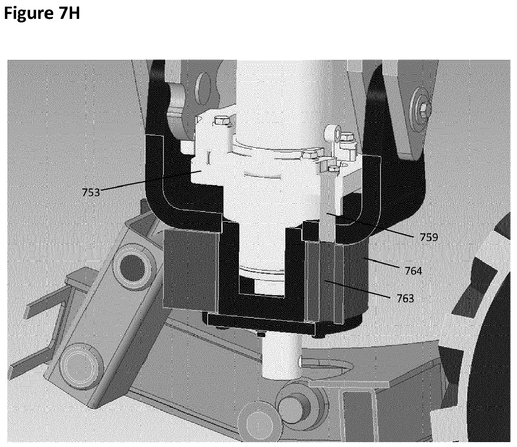

When the wheel connection mechanism 750 is in a ploughing configuration, and the peg 755 is received in the first or third notch 756, 758, the downwardly extending pin 759 is retained in a hole 763 (shown in Figure 7H) in the wheel swivelling sleeve 764 such that the wheel swivelling sleeve 764 cannot rotate about the swivel axis 752. In contrast, as shown in Figure 7H, when the wheel connection mechanism 750 is in the transport configuration, the downwardly extending pin 759 is no longer located in the hole 763 such that the wheel swivelling sleeve 764 is free to rotate about the swivel axis 752. This functionality is provided in this example by the second notch 757 being deeper than the first and second notches 756, 758. In this way, the wheel attachment component 753 is vertically displaced relative to the wheel swivelling sleeve 764 by a different amount than is the case when the wheel connection mechanism 750 is in the ploughing configuration. This enables the downwardly extending pin 759 to be moved out of the hole 763 in the wheel swivelling sleeve 764.

The downwardly extending pin 759 is another example of a mechanical detent that can be positioned to either permit or prevent rotation of the ground engaging wheel 720 about the swivel axis 752.

Advantageously, examples of the wheel connection mechanism that are disclosed herein are locked in a ploughing configuration or the transport configuration when the ground engaging wheel is in contact with the ground (or at least when the ground engaging wheel receives at least a minimum / threshold reactive, vertically upwards, force from the ground). Similarly the wheel connection mechanism is in the unlocked configuration when the ground engaging wheel is not in contact with the ground (or at least when the ground engaging wheel does not receive at least the minimum / threshold reactive, vertically upwards, force from the ground). In this way, the configuration of the wheel connection mechanism can be automatically changed when the orientation of the frame is changed (which requires the plough to be lifted off the ground), without requiring any manual operation to secure the wheel connection mechanism in its new configuration. This can greatly increase the speed with which a ploughing operation can be completed, and can also increase the safety of an operator of the plough because they do not have to manipulate any components of the plough by hand in order to change the configuration of the wheel connection mechanism.

In this way, the wheel connection mechanism can automatically transition from the ploughing configuration or the transport configuration to the unlocked configuration in response to removal of the reactive, vertically upwards, force on the ground engaging wheel. Also, the wheel connection mechanism can automatically transition from the unlocked configuration to the ploughing configuration or the transport configuration in response to the application of the reactive, vertically upwards, force on the ground engaging wheel.

Preferences and options for a given aspect, feature or parameter of the invention should, unless the context indicates otherwise, be regarded as having been disclosed in combination with any and all preferences and options for all other aspects, features and parameters of the disclosure.

## Claims

1. A plough (10) comprising:
a frame (312), which is rotatable between a ploughing orientation and a transport orientation;
a set of plough bodies (322) connected to the frame (312) such that: when the frame (312) is in the ploughing orientation, the plough bodies (322) can be positioned in the ground to perform a ploughing operation; and when the frame (312) is in the transport orientation, the plough bodies (322) are above the ground such that the plough (10) can be transported without the plough bodies (322) being positioned in the ground;
a ground engaging wheel (320; 420); and
a wheel connection mechanism (350; 450) that connects the ground engaging wheel (320; 420) to the frame (312), wherein the wheel connection mechanism (350; 450) defines a horizontal axis (451) and a swivel axis (452), wherein the ground engaging wheel (320; 420) is rotatable about the horizontal axis (451) to move it around the longitudinal axis (L1) of the frame (312), wherein the swivel axis (452) is parallel with the plane of the ground engaging wheel (320; 420), wherein the wheel connection mechanism (350; 450) comprises:
a ploughing configuration, when the frame (312) is in the ploughing orientation and the ground engaging wheel (320; 420) is in contact with the ground such that it receives a reactive, vertically upwards, force from the ground, in which:
the ground engaging wheel (320; 420) is locked such that it cannot rotate about the swivel axis (452) of the wheel connection mechanism (350; 450); and
the ground engaging wheel (320; 420) is locked such that it cannot rotate about the horizontal axis (451) of the wheel connection mechanism (350; 450);
a transport configuration, when the frame (312) is in the transport orientation and the ground engaging wheel (320; 420) is in contact with the ground such that it receives a reactive, vertically upwards, force from the ground, in which:
the ground engaging wheel (320; 420) is rotatable about the swivel axis (452) of the wheel connection mechanism (350; 450); and
the ground engaging wheel (320; 420) is locked such that it cannot rotate about the horizontal axis (451) of the wheel connection mechanism (350; 450);
and
an unlocked configuration when the ground engaging wheel (320; 420) is not in contact with the ground such that it does not receive a reactive, vertically upwards, force from the ground, in which:
the ground engaging wheel (320; 420) is rotatable about the horizontal axis (451) of the wheel connection mechanism (350; 450) in order transition between the ploughing configuration and the transport configuration.

2. The plough (10) of claim 1, wherein:
the wheel connection mechanism (350; 450) is locked in the ploughing configuration or the transport configuration when the ground engaging wheel (320; 420) receives at least a minimum reactive, vertically upwards, force from the ground; and
the wheel connection mechanism (350; 450) is in the unlocked configuration when the ground engaging wheel (320; 420) does not receive at least the minimum reactive, vertically upwards, force from the ground.

3. The plough (10) of claim 1 or claim 2, wherein the wheel connection mechanism (350; 450) is configured to:
automatically transition from the ploughing configuration or the transport configuration to the unlocked configuration in response to removal of the reactive, vertically upwards, force on the ground engaging wheel (320; 420).

4. The plough (10) of any preceding claim, wherein the wheel connection mechanism (320; 420) is configured to:
automatically transition from the unlocked configuration to the ploughing configuration or the transport configuration in response to the application of the reactive, vertically upwards, force on the ground engaging wheel (320; 420).

5. The plough (10) of any preceding claim, wherein the wheel connection mechanism (350; 450) comprises a wheel attachment component (453) and a frame attachment component (454), wherein:
the frame attachment component (454) has a first notch (456) and a second notch (457) for receiving the wheel attachment component (453), wherein the first notch (454) and the second notch (456) are axially offset by about 90 degrees around the horizontal axis (451);
the wheel attachment component (453) is movable vertically relative to the frame attachment component (454) as the ground engaging wheel (320; 420) is raised from the ground and lowered on to the ground;
when the wheel connection mechanism (350; 450) is in the ploughing configuration, the wheel attachment component (453) is secured in the first notch (456) of the frame attachment component (454) such that movement of the wheel attachment component (453) about the horizontal axis (451) is restricted; and
when the wheel connection mechanism (350; 450) is in the transport configuration, the wheel attachment component (453) is secured in the second notch (456) of the frame attachment component (454) such that movement of the wheel attachment component (453) about the horizontal axis (451)is restricted.

6. The plough (10) of claim 5, wherein, when the wheel connection mechanism (350; 450) is in the unlocked configuration, the wheel attachment component (453) is not secured within either the first or the second notch (456, 457) of the frame attachment component (454) such that the wheel attachment component (453) is free to rotate about the horizontal axis (451).

7. The plough (10) of claim 5 or claim 6, wherein the first notch (456) and the second notch (457) have different depths such that the wheel attachment component (453) is vertically displaced relative to the frame attachment component (454) by different amounts when the wheel connection mechanism (350; 450) is in the ploughing configuration and the transport configuration such that:
when the wheel connection mechanism (350; 450) is in the ploughing configuration and the wheel attachment component (453) is vertically offset from the frame attachment component (454) by a first amount, a mechanical detent (462) is positioned such that movement of the wheel attachment component (453) about the swivel axis (452) is prevented; and
when the wheel connection mechanism (350; 450) is in the transport configuration and the wheel attachment component (453) is vertically offset from the frame attachment component (454) by a second amount, the mechanical detent (462) is positioned such that it permits movement of the wheel attachment component (453) about the swivel axis (452).

8. The plough (10) of any one of claims 5 to 7, wherein the wheel attachment component (453) comprises a cylinder (467) that provides part of the functionality of a depth adjustment apparatus.

9. The plough (10) of any preceding claim, wherein, when the wheel connection mechanism (350; 450) is in the unlocked configuration, the ground engaging wheel (320; 420) is locked such that it cannot rotate about the swivel axis (452) of the wheel connection mechanism (350; 450).
